# EUROPEAN PATENT SPECIFICATION

(11) **EP 1 372 822 B1**
(45) Date of publication and mention of the grant of the patent: **31.05.2006**
(21) Application number: 01922945.9
(22) Date of filing: 30.03.2001
(51) Int. Cl.: B01D 53/22, B01D 61/36

(54) **MEMBRANE PERVAPORATION AND VAPOR PERMEATION PROCESS**
VERFAHREN ZUR PERVAPORATION UND DAMPFPERMEATION MITTELS EINER MEMBRAN
PROCEDE DE PERVAPORATION ET DE PERMEATION DE VAPEUR PAR MEMBRANE

(43) Date of publication of application: 02.01.2004
(73) Proprietor: Trans Ionics Corporation, The Woodlands, TX 77380-1020 (US)
(72) Inventor: SCHUCKER, Robert, C., The Woodlands, TX 77382 (US)
(74) Representative: Curley, Donnacha John
(86) International application number: PCT/US2001/010389
(87) International publication number: WO 2002/078821

(56) References cited:
- EP-A- 0 457 981
- EP-A- 0 509 105
- DE-A- 10 002 692
- FR-A- 2 672 968
- GB-A- 2 229 379
- US-A- 2 970 106
- US-A- 4 108 765
- US-A- 4 370 150
- US-A- 4 386 944
- US-A- 4 670 151
- US-A- 4 929 357
- US-A- 4 952 751
- US-A- 5 030 356
- US-A- 5 226 932
- US-A- 5 753 008

## Description

### FIELD OF THE INVENTION

The present invention relates to a method for the separation of a multi-component feed stream into a permeate stream rich in one or more components of the feed stream and a retentate stream lean in those same components.

### BACKGROUND OF THE INVENTION

Pervaporation is a commercially-practiced membrane separation process in which a non-porous membrane is contacted with a multi-component liquid feed, resulting in the selectively absorption of one or more of the species from the feed. These sorbed species permeate across the membrane under the influence of a concentration gradient that is produced by evaporating the sorbed molecules from the product side of the membrane using a vacuum or sweep gas. Permeate vapor is then condensed and recovered as a liquid. Vapor permeation differs from pervaporation in that the feed is already in the vapor phase.

The concept of pervaporation has been recognized for a long time, however, only in the past 40 years has development of this technology as a process taken place. Binning and coworkers at American Oil Co were the first to suggest, based on their experiments with organic liquid mixtures, that pervaporation had commercial potential. During the next two decades, however, most of the work on pervaporation focused on alcohol (ethanol)-water separation, since this demonstrated that pervaporation could achieve something not possible by ordinary distillation - breaking of the ethanol-water azeotrope. SETEC and GFT (now part of Le Carbone-Lorraine) in Germany commercialized pervaporation membrane systems based on composite polyvinyl alcohol membranes for this application in the 1980's and there are numerous commercial facilities around the world with capacities as large as 150,000 liters/day using this technology. The current invention relates to an improvement in both pervaporation systems and vapor permeation systems and specifically an improved method of maintaining a low partial pressure of permeate on the permeate side of the membrane. U.S. 5,753,008, which is incorporated herein by reference, which discloses a vapor permeation process, teaches that there are three known ways used for maintaining a sufficiently low partial pressure of permeate on the downstream side of a membrane: (a) the vacuum method, (b) the dilution method and (c) the countercurrent sweep method. Most commercial pervaporation systems use the vacuum method. Small systems use vacuum pumps while larger systems, of necessity, use multi-stage steam ejectors; and the cost of operation with the latter becomes a significant part of the total package cost.

There are problems with both methods of maintaining vacuums. Vacuum pumps achieve excellent vacuums (< 10 torr), but are expensive to maintain. Unfortunately, the better the vacuum, the harder it is to condense the permeate; and many commercial pervaporation systems have expensive refrigeration systems as part of their condensers. Furthermore, because it is impossible, even at very low temperatures, to totally condense the permeate (especially at < 10 torr), vacuum pump oil may become contaminated with permeate, thus requiring more maintenance. Vacuum pumps cannot be used for large systems, because their displacements are generally too low.

Steam ejectors are simpler, but are limited in the level of vacuum they can achieve at reasonable steam flow rates. Three-stage ejectors are normally required for pervaporation systems, thus adding to their complexity. Furthermore, a small amount of permeate is mixed with the steam condensate; and, while for most organic systems, the water phase and the organic phase separate, there is always a finite concentration of permeate dissolved in the water condensate that still needs to be removed prior to discharge into natural waterways.

It would be desirable to have an inexpensive process for the selective pervaporative separation of either aqueous or organic feeds that is applicable over a wide range of feed rates. Such a process would represent a significant advance in the art.

US 4,386,944 discloses a system for increasing the concentration of a combustible component of a gaseous mixture containing such component (e.g. methane) and an additional gaseous component (e.g. carbon dioxide), wherein the gaseous mixture is contacted with a permselective membrane which is permeable to both such components and has selectivity for the additional component. A pressure difference is maintained across the membrane. At least a portion of the energy employed to maintain the pressure difference is provided by combustion of at least a portion of the combustible component, which has permeated through the membrane.

US4370150 discloses a system in which natural gas is improved for use as an engine fuel gas stream by treating with a membrane through which hydrogen sulfide and heavier hydrocarbons permeate preferentially. The reject gas is returned to the natural gas pipeline. The upgraded gas is used for engine fuel to operate the pipeline compressor. Treatment of the natural gas provides a cleaner, higher octane fuel for engine use, and reduces engine wear and failure. EP0457981 discloses a system for separation of feed streams containing multiple components by means of a multi membrane staged pervaporation process wherein each membrane stage in series is run at progressively higher temperature, stronger vacuum or both than the preceding stage.

GB2229379 discloses a distillation separation membrane for use in desalination of sea water or brine has a hydrophobic separation coating on the surface of a porous support member the coating being formed dynamically on the porous support member by subjecting the surface of the porous support member to a membrane forming component for a period of time sufficient to form a separation coating capable of distillation separation of salt from water.

EP0509105 discloses an organic solvent evaporating tank having pervaporation membrane modules internally fixed thereto for removing water, and a method of regenerating organic solvent using the tank. It is suitable for fitting to a system for cleaning with vapor of organic solvent and drying semiconductor material after washing it with water.

It is therefore an object of the present invention to provide a highly efficient method and apparatus for pervaporation or vapor permeation that can be used in both small and large process applications.

It is a further object of the present invention to provide a highly efficient method and apparatus for treatment of either aqueous or organic feeds.

It is still a further object of the present invention to provide a highly efficient method and apparatus that provides superior performance using different module designs (hollow fiber, spiral wound or stacked flat).

These and other objects, which will become apparent to one of ordinary skill, are summarized and described in detail below.

### SUMMARY OF THE INVENTION

In accordance with the present invention there is provided a process for the separation of multi-component feed streams into a permeate stream rich in one or more components of the feed and a retentate stream lean in those same components comprising the features of the process defined in claim 1.

In preferred embodiments of the present invention the feedstream is selected from those comprising liquids, vapors and permanent gases, such as inert gases.

In another preferred embodiment of the present invention the feedstream comprises a naphtha stream, more preferably a gasoline stream.

In yet another preferred embodiment of the present invention the feedstream comprises a mixed olefin/paraffin stream.

In still another preferred embodiment of the present invention the relative volatility of said permeate versus said working fluid is at least about 1.2.

In other preferred embodiments of the present invention the working liquid is selected from the group consisting of propylene carbonate, ethylene carbonate, N-methyl pyrrolidone, tetramethylene sulfone, tetraethylene glycol, N-formyl morpholine, furfural, nitrobenzene, dipropylene glycol, glycerol, diethylene glycol, ethylene glycol and n-butyl-methyl immidazolium hexafluorophosphate.

In yet other preferred embodiments of the present invention the fluid leaving said Venturi- type nozzle is at a temperature range of about 0 °C to 150 °C.

### BRIEF DESCRIPTION OF THE DRAWINGS

Figure 1 is a process flow sheet for a conventional pervaporation system utilizing a vacuum pump to pull vacuum on the membrane permeate side.
Figure 2 is a process flow sheet for a conventional pervaporation system utilizing a steam ejector to pull vacuum on the membrane permeate side.
Figure 3 is a process flow sheet for the present invention.

### DETAILED DESCRIPTION OF THE INVENTION

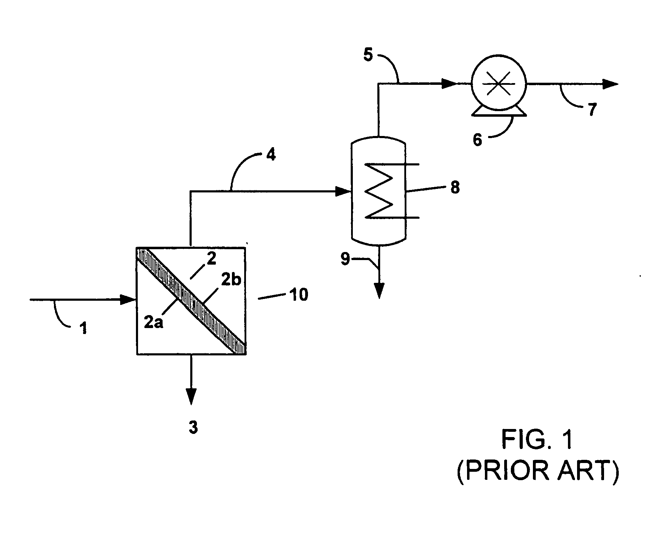

The present invention relates to a method for the separation of a multi-component feed stream into a distinct permeate stream rich in one or more components of the feed stream and a distinct retentate stream lean in those same components. More particularly, the present invention is directed to an improved method of achieving the vacuum required on the permeate side of the membrane using an aspirator rather than a vacuum pump. The invention is best understood when compared to the two conventional configurations of vacuum systems used in pervaporation: (a) vacuum pumps and (b) steam ejectors. Referring to Figure 1, the feed is pumped into the permeation unit **10** through line **1.** The permeation unit contains a non-porous membrane **2** having a first surface **2a** and an opposing second surface **2b.** A portion of the feed dissolves into and permeates across the selective membrane **2** from the first surface **2a** to the opposing second surface **2b.** The permeate is volatilized from the second surface **2b** by the vacuum being pulled by vacuum pump **6** and exits the permeation unit through line **4.** Permeate vapor then passes into condenser **8,** where cooling coils or some other suitable effective heat transfer surface lowers the temperature of the vapor to the point that it condenses at the vacuum in the system. Liquid permeate exits the condenser through line **9.** Air or other gases that have leaked into the system are removed through line **5** by vacuum pump **6** and exit the system through line **7.**

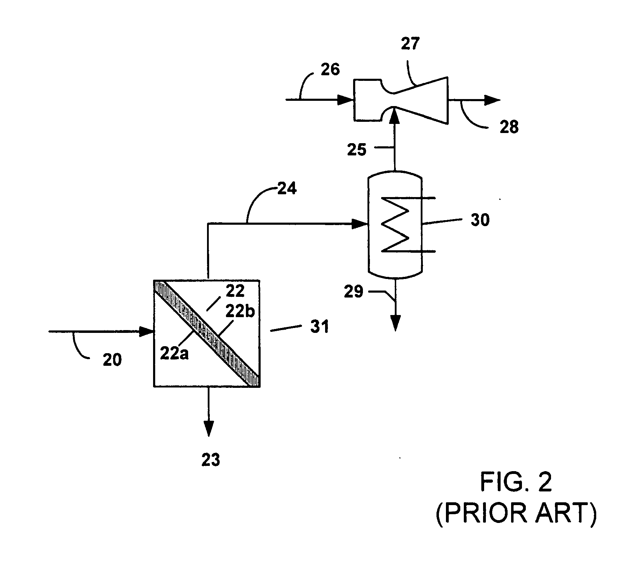

Referring to Figure 2, the feed is pumped into the permeation unit **31** through line **20.** The permeation unit contains a non-porous membrane **22** having a first surface **22a** and an opposing second surface 22b. A portion of the feed dissolves into and permeates across the selective membrane **22** from the first surface **22a** to the opposing second surface **22b.** The permeate is volatilized from the second surface **22b** by the vacuum being pulled by steam ejector **27** and exits the permeation unit through line **24.** Permeate vapor then passes into condenser **30** where cooling coils or some other suitable effective heat transfer surface lower the temperature of the vapor to the point that it condenses at the vacuum in the system. Liquid permeate exits the condenser through line **29**. Air or other gases that have leaked into the system are removed through line **25** by steam ejector **27** and exit through line **28.** Vacuum is pulled by steam passing into the ejector through line **26** and exiting also through line **28.**

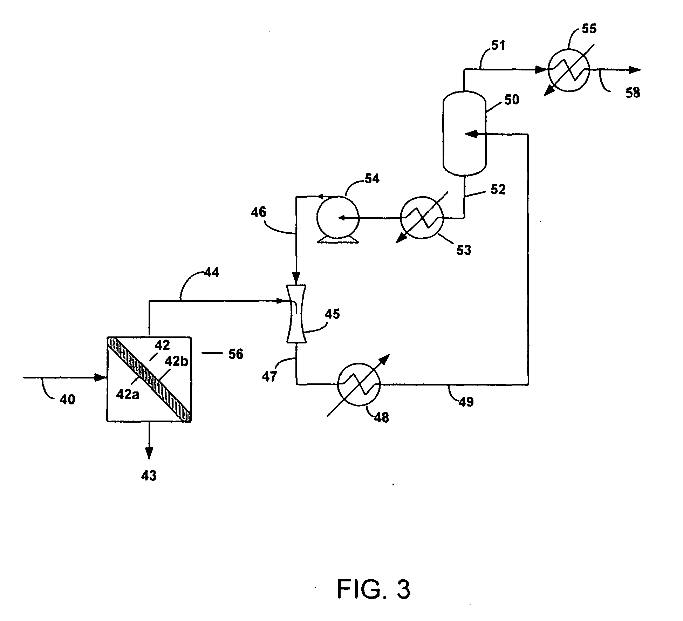

The configuration of the present invention is shown in Figure 3. The feed is pumped into the permeation unit **56** through line **40.** The permeation unit contains a non-porous membrane **42** having a first surface **42a** and an opposing second surface **42b.** A portion of the feed dissolves into and permeates across the selective membrane **42** from the first surface **42a** to the opposing second surface **42b**. The permeate is volatilized from the second surface **42b** by the vacuum being pulled by the Venturi-type nozzle 45 and exits the permeation unit through line **44**. Venturi-type nozzles are well known in the art and thus a detailed description is not needed for purposes of this invention. A typical Venturi-type nozzle will be a circular-arc-Venturi having a converging-diverging pathway. The converging-diverging pathway causes an increase in the velocity of flow of a fluid and a corresponding decrease in fluid pressure, thus creating a suction, or vacuum, for drawing a fluid therethrough. It is preferred that the temperature of fluid leaving the Venturi-type nozzle is from about 0° to about 150°C. Working liquid is pumped by pump **54** through line **46** into the Venturi-type nozzle. The passage of liquid through the converging-diverging nozzle creates a suction on the permeate module. Working liquid containing permeate which has dissolved into it exits through line **47.** It is then heated by heat exchanger **48** and passes through line **49** to the flash drum or tower **50,** where the permeate flashes off and exits through line **51.** It is then cooled and condensed by heat exchanger **55,** which operates at approximately atmospheric pressure, and exits as a liquid through line **58.** Note that it is easier to condense this vapor because the pressure is higher than in high vacuum systems. Non-volatile working liquid exits the flash tower through line **52,** is cooled by heat exchanger **53** and enters the suction side of pump **54** for recycle to the Venturi-type nozzle.

The present invention provides a method of providing a vacuum for a pervaporation or vapor permeation system that does not use a vacuum pump or a steam ejector. It is based on the use of a converging-diverging (Venturi-type) nozzle that uses a liquid extraction solvent as the working fluid instead of steam. The permeate side of the membrane module is connected directly to the throat of the Venturi, so that the working liquid passing through the nozzle pulls a vacuum on the membrane system. The extraction solvent is one that has an affinity for the permeate molecule, thereby significantly lowering the permeate vapor pressure even more.

The present invention can be used for both vapor permeation and pervaporation. It can be used in any number of separations, including but not limited to, (a) organic liquid separations (such as aromatic/aliphatic separation, which may include separation of aromatics from cat naphtha having a nominal boiling range of 23.89ºC to 221.11ºC (75°F to 430ºF), such as the separation of benzene from cat naphtha or gasoline and the separation of aromatics from lube oil streams; olefin/paraffin separation, such as ethylene from ethane and propylene from propane; and methyl tertiary butyl ether (MTBE)/methanol separation), (b) recovery of volatile organic compounds from wastewater, such as MTBE from water; (c) recovery of solvents from purge gas streams, which gas streams are preferably normally gaseous streams or permanent gas streams such as nitrogen, argon and the like, which can also include the recovery of trichloroethylene and other dry cleaning solvents from air; (d) alcohol/water separations, such as the removal of ethanol from water, including beverages; and (e) the dehydration of organic streams. Preferred working fluids for use in the instant invention will have at least one, more preferably at least two of the following characteristics: a) an effective boiling point different from the permeate; b) an affinity for the permeate molecules and c) thermal stability at process temperatures. The term "effective boiling point different from the permeate", as used herein, means the difference between the boiling point of the working fluid and permeate will be sufficient to allow an effective separation of the two in a separation stage, such as in a flash drum. The boiling point difference is measured in terms of the relative volatility of the two fluids. The relative volatility of the permeate versus the working fluid is at least about 1.05, more preferably at least 1.2 and most preferably at least 1.4. Working liquids for aromatic/aliphatic separations include, but are not limited to, those selected from the group consisting of propylene carbonate, ethylene carbonate, N-methyl pyrrolidone, tetramethylene sulfone, tetraethylene glycol, N-formyl morpholine, furfural, nitrobenzene, dipropylene glycol, glycerol, diethylene glycol, ethylene glycol and n-butyl-methyl immidazolium hexafluorophosphate, and mixtures thereof. Working liquids for recovery of VOCs from wastewater and recovery of solvents from gas streams include many of these same solvents and additionally include silicone fluids and low temperature ionic liquids. For alcohol/water separations and dehydration of organic streams, glycol-based solvents (tetraethylene glycol, propylene glycol and glycerine) are preferred.

Persons of ordinary skill in the art will recognize that many modifications in this process are possible, including but not limited to (a) integration of the heat exchangers for optimum heat utilization, (b) utilization of working liquids that are totally immiscible with the permeate thus replacing the flash tower with a simple decanter, (c) use of reactive species in the working liquid to chemically react with or complex the permeate in such a way that its vapor pressure is even lower, and others. The embodiment described herein is meant to be illustrative only and should not be taken as limiting the invention, which is defined in the following claims.

## Claims

1. A pervaporation or vapor permeation process for the separation of a multi-component feed stream into a permeate stream rich in one or more components of the feed and a retentate stream lean in those same components comprising:
passing said feed stream to a permeation unit (56) containing a non-porous membrane (42) having a first surface (42a) and a second opposing surface (42b) :
contacting said first surface with said feed stream wherein one or more components of said feed selectively absorb into said first surface and permeate through said membrane from said first surface to said opposing second surface under the influence of a concentration gradient across said membrane, said concentration gradient being maintained by the use of a vacuum on said second surface, which vacuum is produced by a working liquid passing through a Venturi-type nozzle (45), said permeate being drawn from said second surface into said Venturi-type nozzle (45) and into the working liquid passing through said nozzle, wherein said working liquid is comprised of one or more solvents that have an affinity for the permeate molecules and the relative volatility of said permeate versus said working liquid is at least 1.05,
and
separating said permeate from said working liquid.

2. The process of claim 1 wherein the feed stream comprises a liquid selected from the group consisting of: a naphtha boiling range stream; a mixed olefin/paraffin stream; an aqueous stream containing dissolved organics; and an organic stream containing dissolved water, free water, or both.

3. The process of claim 2 wherein the feed stream is a gasoline stream.

4. The process of claim 1 wherein the feed stream comprises a vapor.

5. The process of claim 4 wherein the feed stream is a vaporized organic stream or a natural gas stream.

6. The process of claim 1 wherein the feed stream comprises one or more permanent gases.

7. The process of claim 6 wherein the feed stream comprises:
a) nitrogen containing an organic component;
b) argon containing an organic component; air containing an organic component; or carbon dioxide containing an organic component.

8. The process of claim 1 wherein the relative volatility of said permeate versus said working liquid is at least about 1.2.

9. The process of claim 1 wherein said working liquid is selected from the group consisting of propylene carbonate, ethylene carbonate, N-methyl pyrrolidone, tetramethylene sulfone, tetraethylene glycol, N-formyl morpholine, furfural, nitrobenzene, dipropylene glycol, glycerol, diethylene glycol, ethylene glycol and n-butyl-methyl immidazolium hexafluorophosphate.

10. The process of claim 1 wherein the fluid leaving said Venturi-type nozzle is at a temperature of about 0°C to 150° C.

## Patentansprüche

1. Pervaporations- oder Dampfpermeationsverfahren zum Trennen eines Mehrkomponenten-Zustromes in einen Permeatstrom, der reich an einer oder mehreren Zustromkomponenten ist, und einen Retentatstrom, der arm an eben diesen Komponenten ist, umfassend:
Leiten des Zustromes zu einer Permeationseinheit (56), die eine porenfreie Membran (42) mit einer ersten Fläche (42a) und einer zweiten, gegenüberliegenden Fläche (42b) enthält;
Inberührungbringen der ersten Fläche mit dem Zustrom, wobei eine oder mehrere Zustromkomponenten unter der Einwirkung eines an der Membran anliegenden Konzentrationsgradienten selektiv von der ersten Fläche absorbiert werden und die Membran von der ersten Fläche her zu der gegenüberliegenden zweiten Fläche hin durchdringen, wobei der Konzentrationsgradient mittels eines Vakuums auf der zweiten Seite aufrecht erhalten wird, wobei dieses Vakuum durch eine Arbeitsflüssigkeit erzeugt wird, das durch eine Venturidüse (45) strömt, wobei das Permeat von der zweiten Fläche in die Venturidüse (45) und in die durch diese Düse strömende Arbeitsflüssigkeit gezogen wird, wobei die Arbeitsflüssigkeit aus einem oder mehreren Lösemitteln besteht, die eine Affinität für die Permeatmoleküle aufweisen, und wobei die relative Volatilität des Permeats im Verhältnis zu der Arbeitsflüssigkeit wenigstens 1,05 beträgt; und
Trennen des Permeats von der Arbeitsflüssigkeit.

2. Verfahren nach Anspruch 1, wobei der Zustrom eine Flüssigkeit umfasst, die aus einer Gruppe ausgewählt ist, die aus Folgendem besteht: einem Strom im Naphtha-Siedebereich ; einem Mischstrom aus Olefin/Paraffin ; einem wässrigen Strom, der gelöste organische Stoffe enthält; und einem organischen Strom, der gelöstes Wasser, freies Wasser oder beides enthält.

3. Verfahren nach Anspruch 2, wobei es sich bei dem Zustrom um einen Benzinstrom handelt.

4. Verfahren nach Anspruch 1, wobei der Zustrom einen Dampf umfasst.

5. Verfahren nach Anspruch 4, wobei der Zustrom ein verdampfter organischer Strom oder ein Erdgasstrom ist.

6. Verfahren nach Anspruch 1, wobei der Zustrom ein oder mehrere Permanentgase umfasst.

7. Verfahren nach Anspruch 6, wobei der Zustrom Folgendes umfasst:
a) Stickstoff, der eine organische Komponente enthält;
b) Argon, das eine organische Komponente enthält; Luft, die eine organische Komponente enthält; oder Kohlendioxid, das eine organische Komponente enthält.

8. Verfahren nach Anspruch 1, wobei die relative Volatilität des Permeats im Verhältnis zur Arbeitsflüssigkeit wenigstens etwa 1,2 beträgt.

9. Verfahren nach Anspruch 1, wobei die Arbeitsflüssigkeit aus einer Gruppe ausgewählt ist, die aus Folgendem besteht: Propylencarbonat, Ethylencarbonat, N-methylpyrrolidon, Tetramethylensulfon, Tetraethylenglycol, N-formylmorpholin, Furfural, Nitrobenzen, Dipropylenglykol, Glycerol, Diethylenglykol, Ethylenglykol und n-Butylmethylimmidazoliumhexafluorphosphat.

10. Verfahren nach Anspruch 1, wobei die Flüssigkeit beim Austreten aus der Venturidüse eine Temperatur von etwa 0 °C bis 150 °C aufweist.

## Revendications

1. Procédé de pervaporation ou de perméation de vapeur pour la séparation d'un flux d'alimentation à composants multiples en un flux de perméat riche en un ou plusieurs composants de l'alimentation et un flux de rétentat pauvre en ces mêmes composants, comprenant :
le fait de faire passer ledit flux d'alimentation dans une unité de perméation (56) contenant une membrane non poreuse (42) ayant une première surface (42a) et une seconde surface opposée (42b) ;
la mise en contact de ladite première surface avec ledit flux d'alimentation, tandis qu'un ou plusieurs composants de ladite alimentation sont absorbés sélectivement par ladite première surface et le perméat à travers ladite membrane depuis ladite première surface vers ladite seconde surface opposée sous l'influence d'un gradient de concentration dans ladite membrane, ledit gradient de concentration étant maintenu en utilisant un vide sur ladite seconde surface, lequel vide est produit par un liquide opérationnel passant par une buse de type Venturi (45), ledit perméat étant aspiré depuis ladite seconde surface dans ladite buse de type Venturi (45) et dans le liquide opérationnel passant dans ladite buse, ledit liquide opérationnel étant composé d'un ou plusieurs solvants ayant une affinité pour les molécules de perméat et la volatilité relative dudit perméat par rapport audit liquide opérationnel étant d'au moins 1,05 et
la séparation dudit perméat dudit liquide opérationnel.

2. Procédé selon la revendication 1, dans lequel le flux d'alimentation comprend un liquide sélectionné parmi le groupe composé d'un flux à domaine d'ébullition de naphta ; d'un flux mélangé d'oléfine/paraffine ; d'un flux aqueux contenant des matières organiques dissoutes ; et d'un flux organique contenant de l'eau dissoute, de l'eau libre ou les deux.

3. Procédé selon la revendication 2, dans lequel le flux d'alimentation est un flux d'essence.

4. Procédé selon la revendication 1, dans lequel le flux d'alimentation comprend une vapeur.

5. Procédé selon la revendication 4, dans lequel le flux d'alimentation est un flux organique vaporisé ou un flux de gaz naturel.

6. Procédé selon la revendication 1, dans lequel le flux d'alimentation comprend un ou plusieurs gaz permanents.

7. Procédé selon la revendication 6, dans lequel le flux d'alimentation comprend :
a) du nitrogène contenant un composant organique ;
b) de l'argon contenant un composant organique ; de l'air contenant un composant organique ; ou du dioxyde de carbone contenant un composant organique.

8. Procédé selon la revendication 1, dans lequel la volatilité relative dudit perméat par rapport audit liquide opérationnel est au moins d'environ 1,2.

9. Procédé selon la revendication 1, dans lequel ledit liquide opérationnel est sélectionné parmi le groupe composé du carbonate de propylène, du carbonate d'éthylène, du N-méthyle pyrrolidone, du tétraméthylène sulfone, du tétraéthylène glycol, de la N-formyl morpholine, du furfural, du nitrobenzène, du dipropylène glycol, du glycérol, du diéthylène glycol, de l'éthylène glycol et des n-butyle-méthyle immidazolium hexafluorophosphates.

10. Procédé selon la revendication 1, dans lequel le fluide quittant la buse de type Venturi est à une température d'environ 0° C à 150° C.
